# EUROPEAN PATENT SPECIFICATION

(11) **EP 1 563 284 B1**
(45) Date of publication and mention of the grant of the patent: **24.02.2010**
(21) Application number: 03754922.7
(22) Date of filing: 26.09.2003
(51) Int. Cl.: G01N 25/18, G01N 30/12, G01N 30/30

(54) **PHASED MICRO ANALYZER III, IIIA**
PHASENGESTEUERTER MIKROANALYSATOR
MICRO-ANALYSEUR III, IIIA EN PHASE

(30) Priority: 27.09.2002 US 414211 P; 15.01.2003 US 440108 P
(43) Date of publication of application: 17.08.2005
(73) Proprietor: Honeywell International Inc., Morristown NJ 07960 (US)
(72) Inventor: BONNE, Ulrich, Hopkins, MN 55343 (US); REZACHEK, Tom, M., Cottage Grove, MN 55016 (US)
(74) Representative: Haley, Stephen
(86) International application number: PCT/US2003/030457
(87) International publication number: WO 2004/029602

(56) References cited:
- WO-A-00/61261
- US-A- 4 944 035
- US-A- 5 135 549
- US-B1- 6 169 965
- US-B1- 6 393 894

## Description

The present invention pertains to detection of fluids. Particularly, the invention pertains to a phased heater array structure, and more particularly to application of the structure as a sensor for the identification and quantification of fluid components. The term "fluid" may be used as a generic term that includes gases and liquids as species. For instance, air, gas, water and oil are fluids.

Aspects of structures and processes related to fluid analyzers may be disclosed in U.S. Patent No. 6,393,894 B1, issued May 28, 2002, to Ulrich Bonne et al., and entitled "Gas Sensor with Phased Heaters for Increased Sensitivity,"

U.S Patent No. 5,308,553 EI, issued October 30, 2001, to Ulrich Bonne et al., and entitled "Self-Normalizing Flow Sensor and Method for the Same, and U.S. Patent No, 4,944,035, issued July 24, 1990, to Roger L, Aagard et al., and entitled "Measurement of Thermal Conductivity and Specific Heat,".

Presently available gas composition analyzers may be selective and sensitive but lack the capability to identify the component(s) of a sample gas mixture with unknown components, besides being generally bulky and costly: The state-of-the-art combination analyzers GC-GC and GC-MS (gas chromatograph-mass spectrometer) approach the desirable combination of selectivity, sensitivity and smartness, yet are bulky, costly, slow and unsuitable for battery-powered applications. In GC-AED (gas chromatograph - atomic emission detector), the AED alone uses more than 100 watts, uses water cooling, has greater than 10 MHz microwave discharges and are costly.

The phased heater array sensor initially consisted of separate chips for the concentrator, the separator, as well as for an off-chip flow sensor. These may be integrated onto one chip and provide improvements in the structural integrity and temperature control while reducing power consumption. The next phased heater array sensor involved an addition of integratable, micro-discharge devices for detection, identification and quantification of analyte. However, short of the full integration of the FET switches and shift register(s) onto the chip, there still was a need to wire-bond, route, connect and route about 110 wires from a daughter-board to mother-board with its micro-processor-controlled FET switches, which caused bulk and labor cost. In addition, the phased heater array sensor analysers and conventional GCs seem to lack flexibility to change preconcentration and separation capabilities on-line.

Detection, identification and analysis of very small amounts of fluids in a more efficient and inexpensive manner are desired.

US-A-5135549 discloses a chromatographic technique and apparatus.

According to a first aspect of the invention, there is provided a fluid sensor comprising:
a concentrator;
a separator connected to concentrator; and
a phased heater array having a first plurality of heating elements situated in the concentrator and a second plurality of heating elements situated in the separator,
characterised by a ratio control mechanism for changing, in use, the ratio of the first plurality of heating elements which heat up relative to the second plurality of heating elements which heat up.

The present invention relates to a design and operation of a sensor system/analyser consisting of an array of selective, sensitive, fast and low-powerphase heater elements in conjunction with an array of compact, fast, low-power, ambient pressure, minimal pumping spectral analysis devices to achieve fluid component presence, identification and quantification.

Additionally, flexibility, low cost and compactness features are incorporated via FET switches, shift registers and control logic onto the same or a separate chip connected to the phased heater array sensor chip via wire-bonds or solder-bumps on the daughter-PCB (printed circuit board connected to the mother-PCB via only about ten leads) and providing the user flexibility to be able to select the fraction of total heatable elements for preconcentration and separation; and selection of analysis logic.

Multi-fluid detection and analysis may be automated via affordable, in-situ, ultra-sensitive, low-power, low-maintenance and compact micro detectors and analyzers, which can wirelessly or by another medium (e.g., wire or optical fiber) send their detection and/or analysis results to a central or other manned station. A micro fluid analyzer may incorporate a phased heater array, concentrator, separator and diverse approaches. The micro fluid analyzer may be a low-cost approach to sense ozone with a 50 part-per-billion (ppb) maximum emission objective. The analyzer may be capable of detecting a mixture of trace compounds in a host or base sample gas or of trace compounds in a host liquid.

The fluid analyzer may include a connective configuration to an associated microcontroller or processor. An application of the sensor may include the detection and analyses of air pollutants in aircraft space such as aldehydes, butyric acid, toluene, hexane, and the like, besides the conventional CO₂, H₂O and CO. Other sensing may include conditioned indoor space for levels of gases such as CO₂, H₂O, aldehydes, hydrocarbons and alcohols, and sensing outdoor space and process streams of industries such as in chemical, refining, product purity, food, paper, metal, glass and pharmaceutical industries. Also, sensing may have a significant place in environmental assurance and protection. Sensing may provide defensive security in and outside of facilities by early detection of chemicals before their concentrations increase and become harmful.

A vast portion of the sensor may be integrated on a chip with conventional semiconductor processes or micro electromechanical system (MEMS) techniques. This kind of fabrication results in small, low-power consumption, and in situ placement of the micro analyzer. The flow rate of the air or gas sample through the monitor may also be very small. Further, a carrier gas for the samples is not necessarily required and thus this lack of carrier gas may reduce the dilution of the samples being tested, besides eliminating the associated maintenance and bulk of pressurized gas-tank handling. This approach permits the sensor to provide quick analyses and prompt results, may be at least an order of magnitude faster than some related art devices. It avoids the delay and costs of labor-intensive laboratory analyses. The sensor is intelligent in that it may have an integrated microcontroller for analysis and determination of gases detected, and may maintain accuracy, successfully operate and communicate information in and from unattended remote locations. The sensor may communicate detector information, analyses and results via utility lines, or optical or wireless media, with the capability of full duplex communication to a host system over a significant distance with "plug-and-play" adaptation and simplicity. The sensor may be net-workable. It may be interconnectable with other gas sample conditioning devices (e.g., particle filters, valves, flow and pressure sensors), local maintenance control points, and can provide monitoring via the internet. The sensor is robust. It can maintain accuracy in high electromagnetic interference (EMI) environments having very strong electrical and magnetic fields. The sensor has high sensitivity. The sensor offers sub-ppm (parts-per-million) level detection which is 100 to 10,000 times better than related art technology, such as conventional gas chromatographs which may offer a sensitivity in a 1 to 10 ppm range. The sensor is, among other things, a lower-power, faster, and more compact, more sensitive and affordable version of a gas chromatograph. It may have structural integrity and have very low or no risk of leakage in the application of detecting and analyzing pressurized fluid samples over a very large differential pressure range.

In the sensor, a small pump, such as a Honeywell MesoPump^{™}, may draw a sample into the system, while only a portion of it might flow through the phased heater sensor at a rate controlled by the valve (which may be a Honeywell MesoValve^{™} or Hoerbiger PiezoValve^{™}). This approach may enable fast sample acquisition despite long sampling lines, and yet provide a regulated, approximately 0.1 to 3 cm³/min flow for the detector. The pump of the sensor may be arranged to draw sample gas through a filter in such a way as to provide both fast sample acquisition and regulated flow through the phased heater sensor.

As a pump draws sample gas through the sensor, the gas may expand and thus increase its volume and linear velocity. The control circuit may be designed to compensate for this change in velocity to keep the heater "wave" in.sync with the varying gas velocity in the sensor. To compensate for the change in sample gas volume as it is forced through the heater channels, its electronics may need to adjust either the flow control and/or the heater "wave" speed to keep the internal gas flow velocity in sync with the heater "wave".

During a gas survey operation, the sensor's ability (like any other slower gas chromatographs) may sense multiple trace constituents of air such as about 330 to 700 ppm of CO₂, about 1 to 2 ppm of CH₄ and about 0.5 to 2.5 percent of H₂O. This may enable on-line calibration of the output elution times as well as checking of the presence of additional peaks such as ethane, possibly indicating a natural gas, propane or other gas pipeline leak. The ratio of sample gas constituent peak heights thus may reveal clues about the source of the trace gases, which could include car exhaust or gasoline vapors.

The sensor may have the sensitivity, speed, portability and low power that make the sensor especially well suited for safety-mandated periodic leak surveys of natural gas or propane gas along transmission or distribution pipeline systems and other gas in chemical process plants.

The sensor may in its leak sensing application use some or all sample gas constituents (and their peak ratios) as calibration markers (elution time identifies the nature of the gas constituents) and/or as leak source identifiers. If the presence alone of a certain peak such as methane (which is present in mountain air at about one to two ppm) may not be enough information to indicate that the source of that constituent is from swamp gas, a natural or pipeline gas or another fluid.

The sensor may be used as a portable device or installed at a fixed location. In contrast to comparable related art sensors, it may be more compact than a portable flame ionization detector without requiring the bulkiness of hydrogen tanks, it may be faster and more sensitive than hot-filament or metal oxide combustible gas sensors, and much faster, more compact and more power-thrifty than conventional and/or portable gas chromatographs.

In the drawings:
Figure 1 is a diagram of a sensor system;
Figure 2 shows details of a micro gas apparatus;
Figure 3 is a layout of an illustrative phased heater mechanism;
Figure 4 is a length-wise sectional view of a heater elements on a streightened channel;
Figure 5 is a length-wise sectional view of a twin-film heater elements on a streightened channel;
Figures 6a, 6b and 6c show a cross-section end views of the twin-film heater element and single film element.
Figure 7 is a graph illustrating heater temperature profiles, along with corresponding concentration pulses produced at each heater element of the sensor apparatus;
Figure 8 is a graph showing several heater elements to illustrate a step-wise build-up on an analyte concentration;
Figure 9 is a graph showing a concentration pulse that reaches about 100 percent concentration level;
Figure 10 is a table showing detection limits and selectivities for various elements;
Figure 11 shows chromatograms of a multielement test mixture;
Figure 12 is a graph of the relative intensity, discharge versus pressure for a gas;
Figure 13 shows sectional views of an array of light source and detector (MDD) pairs for gas sensing.
Figure 14 is a graph of a spectral responsivity comparison between an MDD and a Si-photo diode.
Figure 15 is an illustration of an integrated layout for the phased heater array structure that includes sensors, a concentrator and a separator;
Figure 16 is a schematic of the logic heating element selection for concentrator and separator portions of a sensor.

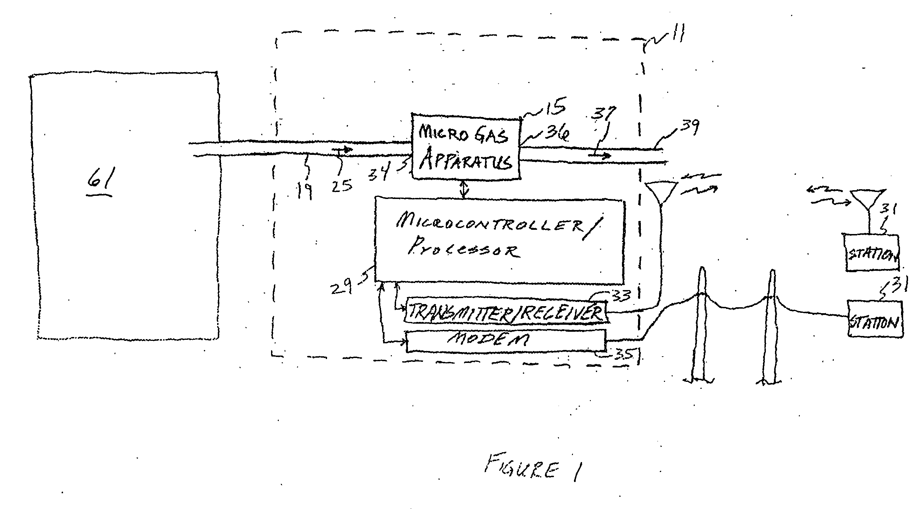

Detection and analysis by sensor 15 of Figure 1 may include detection, identification and quantification of fluid components. That may include a determination of the concentration of or parts-per-million of the fluid detected. Sensor 15 may be used to detect fluids in the environment. Also, sensor 15 may detect miniscule amounts of pollutants in ambient environment of a conditioned or tested space. Sensor 15 may indicate the health and the level of toxins-to-people in ambient air or exhaled air.

Figure 1 reveals an illustrative diagram of a low-power sensor system 11. A sample fluid 25 from a process stream, an ambient space or volume 61 may enter a conduit or tube 19 which is connected to an input 34 of a sensor or micro gas apparatus 15. Fluid 25 may be processed by sensor 15. Processed fluid 37 may exit output 36 of sensor 15 and be exhausted to volume 61 or another volume, wherever designated, via a conduit or tube 39.

Sensor 15 results may be sent to microcontroller/processor 29 for analysis, and immediate conclusions and results. This information may be sent on to observer stations 31 for review and further analysis, evaluation, and decisions about the results found. Data and control information may be sent from stations 31 to microcontroller/processor 29. Data and information may be sent and received via the wireless medium by a transmitter/receiver 33 at sensor 11 and at stations 31. Or the data and information may be sent and received via wire or optical lines of communication by a modem 35 at monitor 11 and station 31. The data and information may be sent to a SCADA (supervisory control and data acquisition) system. These systems may be used in industry (processing, manufacturing, service, health) to detect certain gases and provide information relating to the detection to remote recipients.

Microcontroller or processor 29 may send various signals to analyzer 15 for control, adjustment, calibration or other purposes. Also, microcontroller/processor 29 may be programmed to provide a prognosis of the environment based on detection results. The analysis calculations, results or other information may be sent to modem 35 for conversion into signals to be sent to a station 31 via lines, fiber or other like media. Also, such output to modem 35 may be instead or simultaneously sent to transmitter 33 for wireless transmission to a station 31, together with information on the actual location of the detection obtained, e.g., via GPS, especially if it is being used as a portable device. Also, stations 31 may send various signals to modem 35 and receiver 33, which may be passed on to microcontroller or processor 29 for control, adjustment, calibration or other purposes.

In figure 1, space 61 may be open or closed. Sensor system 11 may have a hook-up that is useable in a closed space 61 such as an aircraft-cabin, machinery room, factory, or some place in another environment. Or it may be useable in an open space 61 of the earth's environment. The end of input tube or pipe 19 may be in open space 61 and exhaust of exit tube 37 may be placed at a distance somewhat removed from a closed space 61. System 11 for space 61 may itself be within space 61 except that tube 39 may exit into space 61, especially downstream in case space 61 is a process stream.

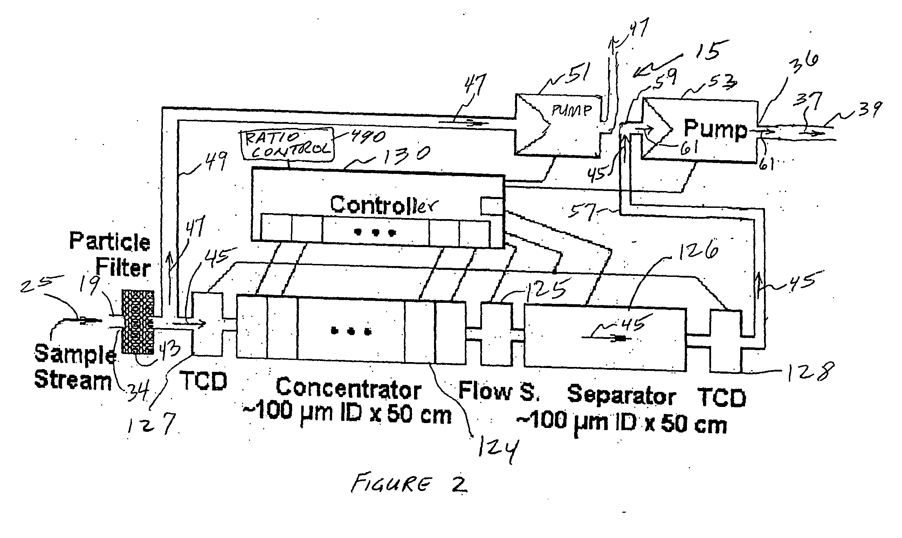

Figure 2 reveals certain details of micro gas apparatus 15. Further details and variants of it are described below in conjunction with subsequent figures. Sample stream 25 may enter input port 34 from pipe or tube 19. There may be a particle filter 43 for removing dirt and other particles from the stream of fluid 25 that is to enter apparatus 15. This removal is for the protection of the apparatus and the filtering should not reduce the apparatus' ability to accurately analyze the composition of fluid 25. Dirty fluid (with suspended solid or liquid non-volatile particles) might impair proper sensor function. A portion 45 of fluid 25 may flow through the first leg of a differential thermal-conductivity detector (TCD, or chemi-sensor (CRD), or photo-ionization sensor/detector (PID), or other device) 127 and a portion 47 of fluid 25 flows through tube 49 to a pump 51. By placing a "T" tube immediately adjacent to the inlet 45, sampling with minimal time delay may be achieved because of the relatively higher flow 47 to help shorten the filter purge time. Pump 51 may cause fluid 47 to flow from the output of particle filter 43 through tube 49 and exit from pump 51. Pump 53 may effect a flow of fluid 45 through the sensor via tube 57. Pump 51 may now provide suction capacity of 10-300 cm3/min at less than 1.45 × 10⁻⁴ Pa (1 psi) pressure drop (Δp) and low-flow-capacity pump 53 may provide 0.1-3 cm3/min at up to a Δp of 1.45 × 10⁻³ Pa (10 psi). There may be additional or fewer pumps, and various tube or plumbing arrangements or configurations for system 15 in Figure 2. Data from detectors 127 and 128 may be sent to control 130, which in turn may relay data to microcontroller and/or processor 29 for processing. Resultant information may be sent to station 31.

Pumps 51 and 53 may be very thrifty and efficient configurations implemented for pulling in a sample of the fluid being checked for detection of possible gas from somewhere. Low-power electronics having a sleep mode when not in use may be utilized. The use of this particularly thrifty but adequately functional pump 51 and 53, which may run only about or less than 1-10 seconds before the start of a concentrator and/or measurement cycle of analyzer system 11, and the use of low-power electronics for control 130 and/or microcontroller/processor 29 (which may use a sleep mode when not in use) might result in about a two times reduction in usage of such power.

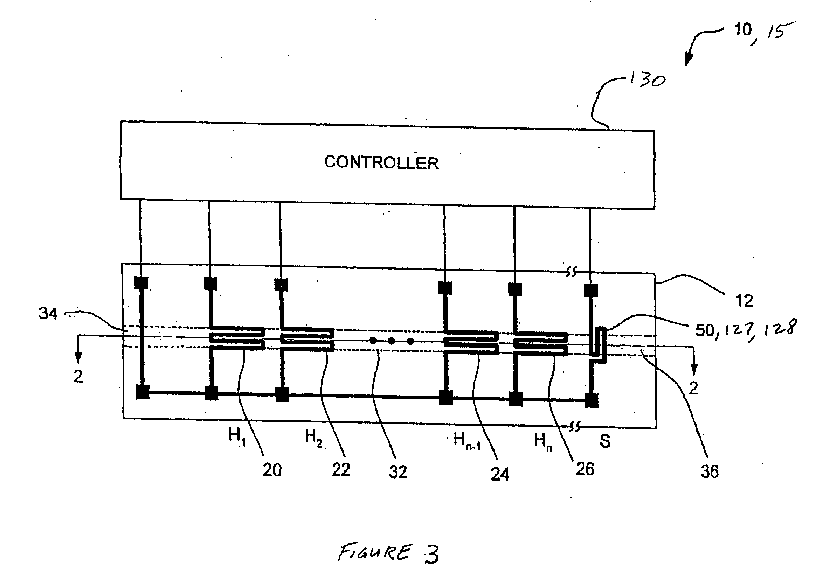

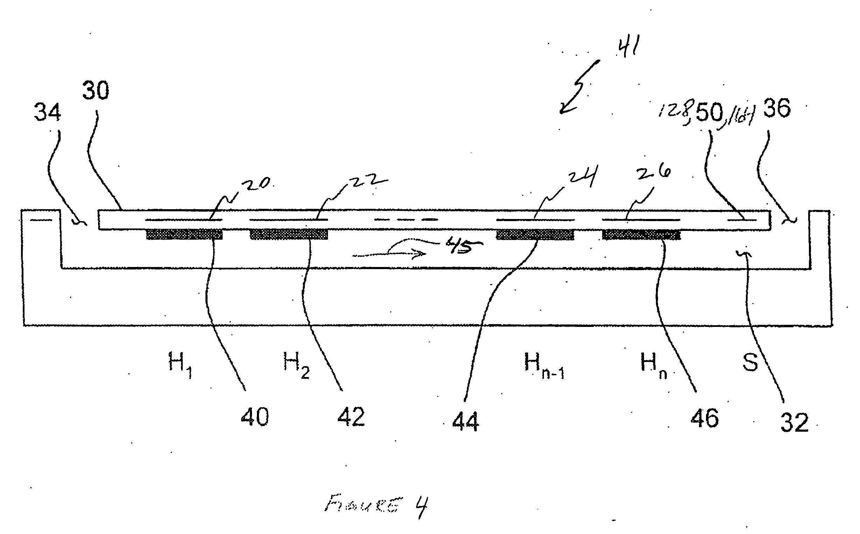

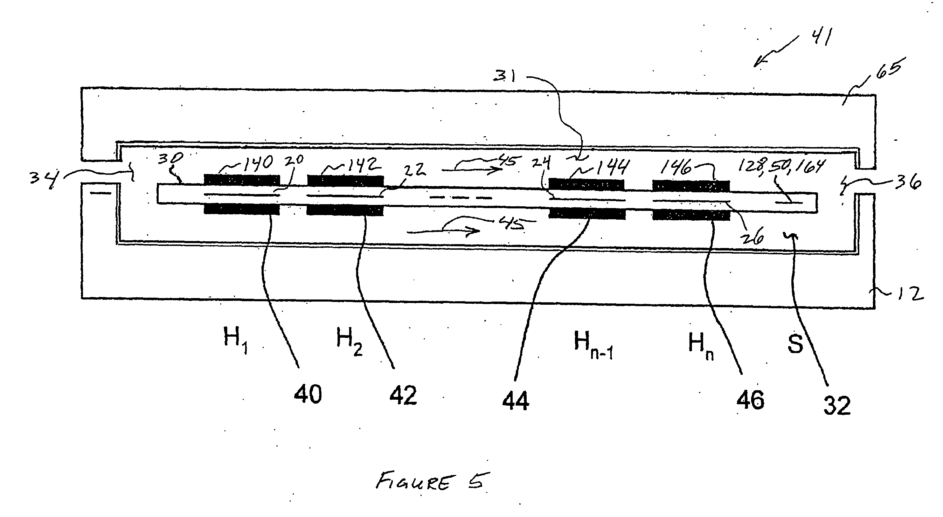

Figure 3 is a schematic diagram of part of the sensor apparatus 10, 15, representing a portion of concentrator 124 or separator 126 in Figure 2. The sensor apparatus may include a substrate 12 and a controller 130. Controller 130 may or may not be incorporated into substrate 12. Substrate 12 may have a number of thin film heater elements 20, 22, 24, and 26 positioned thereon. While only four heater elements are shown, any number of heater elements may be provided, for instance, between two and one thousand, but typically in the 20-100 range. Heater elements 20, 22, 24, and 26 may be fabricated of any suitable electrical conductor, stable metal, or alloy film, such as a nickel-iron alloy sometimes referred to as permalloy having a composition of eighty percent nickel and twenty percent iron; platinum, platinum silicide and polysilicon. Heater elements 20, 22, 24, and 26 may be provided on a thin, low-thermal mass, low-in-plane thermal conduction, support member 30, as shown in Figures 4 and 5. Support member or membrane 30 may be made from Si₃N₄ or other appropriate or like material. The heater elements may be made from Pt or other appropriate or like material.

Substrate 12 may have a well-defined single-channel phased heater mechanism 41 having a channel 32 for receiving the sample fluid stream 45, as shown in Figure 4. Figure 5 reveals a double-channel phased heater design 41 having channels 31 and 32. Substrate 12 and portion or wafer 65 may have defined channels 31 and 32 for receiving a streaming sample fluid 45. The channels may be fabricated by selectively etching silicon channel wafer substrate 12 beneath support member 30 and wafer or portion 65 above the support member. The channels may include an entry port 34 and an exhaust port 36.

The sensor apparatus may also include a number of interactive elements inside channels 31 and 32 so that they are exposed to the streaming sample fluid 45. Each of the interactive elements may be positioned adjacent, i.e., for closest possible contact, to a corresponding heater element. For example, in Figure 4, interactive elements 40, 42, 44, and 46 may be provided on the lower surface of support member 30 in channel 32, and be adjacent to heater elements 20, 22, 24, and 26, respectively. In Figure 5, additional interactive elements 140, 142, 144, and 146 may be provided on the upper surface of support member 30 in second channel 31, and also adjacent to heater elements 20, 22, 24, and 26, respectively. There may be other channels with additional interactive film elements which are not shown in the present illustrative example. The interactive elements may be formed from any number of films commonly used in liquid or gas chromatography, such as silica gel, polymethylsiloxane, polydimethylsiloxane, polyethyleneglycol, porous silica, Nanoglass^{™}, active carbon, and other polymeric substances. Furthermore, the above interactive substances may be modified by suitable dopants to achieve varying degrees of polarity and/or hydrophobicity, to achieve optimal adsorption and/or separation of targeted analytes.

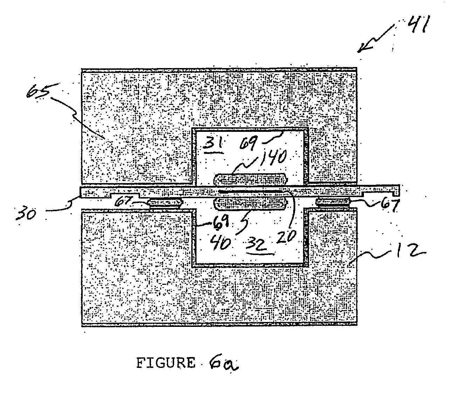

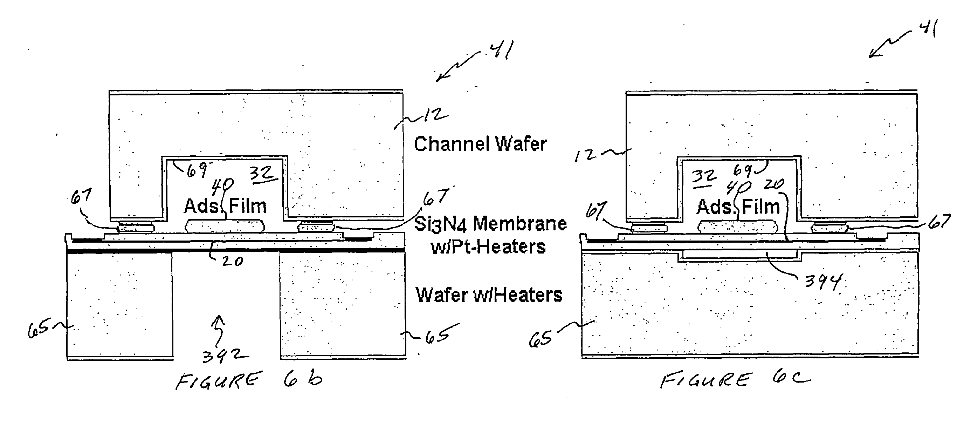

Figure 6a shows a cross-section end view of two-channel phased heater mechanism 41. The top and bottom perspectives of portions in Figures 6a, 6b and 6c may not necessarily appear to be the same. An end view of a single channel phased heater mechanism 41 may incorporate the support member 30 and substrate 12 and the items between them, in Figures 6b and 6c. Figure 6b shows a version of the phased heater mechanism 41 having an exposed 1 micron membrane. Shown in Figure 6b is open space 392. Figure 6c shows a ruggedized, low power version having a small closed space 394. Support member 30 may be attached to top structure 65. Anchors 67 may hold support member 30 in place relative to channel 31. Fewer anchor 67 points minimize heat conduction losses from support 30 to other portions of structure 41. There may be a heater membrane that has a small number anchor points for little heat conduction from the heater elements. In contrast to a normal anchoring scheme, the present example may have a reduction of anchor points to result in the saving about 1.5 times of the remaining heater element input power.

The heater elements of a phased heater array may be coated with an adsorber material on both surfaces, i.e., top and bottom sides, for less power dissipation and more efficient heating of the incoming detected gas. The heater elements may have small widths for reduced power dissipation.

Interactive film elements may be formed by passing a stream of material carrying the desired sorbent material through channel 32 of single-channel heating mechanism 41. This may provide an interactive layer throughout the channel. If separate interactive elements 40, 42, 44, 46 are desired, the coating may be spin-coated onto substrate 30 attached to the bottom wafer 12, before attaching the top wafer 65 in Figure 6a, and then selectively "developed" by either using standard photoresist masking and patterning methods or by providing a temperature change to the coating, via heater elements 20, 22, 24 and 26.

The surfaces of inside channel of the heater array, except those surfaces intentionally by design coated with an adsorber material, may be coated with a non-adsorbing, thermal insulating layer. The thickness of the adsorber coating or film may be reduced thereby decreasing the time needed for adsorption and desorption. As in Figure 6a, coating 69 of a non-adsorbing, thermal insulating material may be applied to the inside walls of channel 31 in the single-channel heater 41, and the wall of channels 31 and 32 in the dual-channel heater mechanism 41, except where there is adsorber coated surfaces, by design, such as the interactive elements. Coating 69 may reduce the needed heater element power by about 1.5 times. The material should have thermal conduction that is substantially less than the material used in the channel walls. The latter may be silicon. Alternative materials for coating 69 may include SiO₂ or other metal oxides. Coating 69 may reduce power used for the heater elements in support 30. A minimizing or reduction of the size (width, length and thickness) of the heater element membranes as well as the adsorber film, while retaining a reasonable ratio of mobile/stationary phase volume, may result in about a four times power reduction. The minimized or reduced adsorber film thickness may reduce the time needed for adsorption-desorption and save about 1.5 times in energy needed per fluid analysis.

Heater elements 20, 22, 24 and 26 may be GC-film-coated on both the top and bottom sides so that the width and power dissipation of the heater element surface by about two times. The fabrication of these heater elements involves two coating steps, with the second step requiring wafer-to-wafer bonding and coating after protecting the first coat inside the second wafer and dissolving the first wafer.

Another approach achieving the desired ruggedness (i.e. not expose a thin membrane 20, 22, 24, ... to the exterior environment) but without the need to coat these both top and bottom, is to coat only the top and reduce the bottom channel 32 to a small height, see Figure 6a, so that the volumetric ratio (air/film) is of a value of less than 500.

The micro gas analyzer may have heater elements 40, 42,..., 44, 46 and 140, 142,..., 144, 146 fabricated via repeated, sequentially spin-coated (or other deposition means) steps, so that a pre-arranged pattern of concentrator and separator elements are coated with different adsorber materials A, B, C, ...(known in GC literature as stationary phases), so that not only can the ratio of concentrator/separator elements be chosen, but also which of those coated with A, B, C and so forth may be chosen (and at what desorption temperature) to contribute to the concentration process and electronically be injected into the separator, where again a choice of element temperature ramping rates may be chosen for the A's to be different for the B, C,... elements; and furthermore adding versatility to this system in such a way that after separating the gases from the group of "A"-elements; another set of gases may be separated from the group of "B" elements, and so forth. The ratio of concentrator to separator heater elements may be set or changed by a ratio control mechanism 490 connected to controller 130.

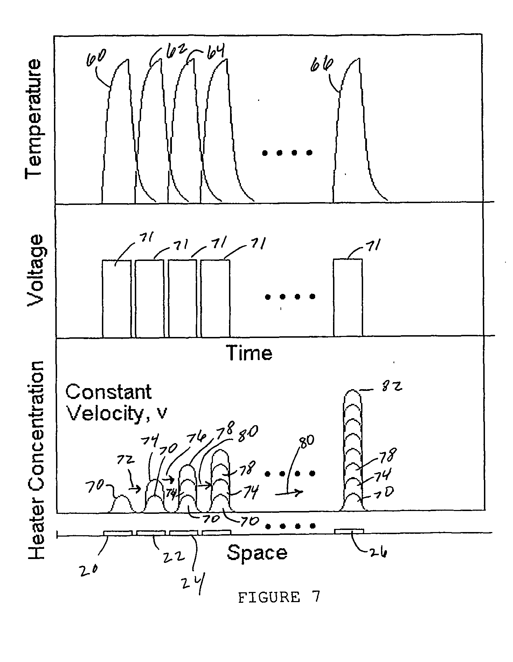

Controller 130 may be electrically connected to each of the heater elements 20, 22, 24, 26, and detector 50 as shown in Figure 3. Controller 130 may energize heater elements 20, 22, 24, and 26 in a time phased sequence (see bottom of Figure 7) such that each of the corresponding interactive elements 40, 42, 44, and 46 become heated and desorb selected constituents into a streaming sample fluid 45 at about the time when an upstream concentration pulse, produced by one or more upstream interactive elements, reaches the interactive element. Any number of interactive elements may be used to achieve the desired concentration of constituent gases in the concentration pulse. The resulting concentration pulse may be provided to detector 50, 128, for detection and analysis. Detector 50, 127, or 128 (Figures 2 and 3) may be a thermal-conductivity detector, discharge ionization detector, CRD, PID, MDD, or any other type of detector such as that typically used in gas or fluid chromatography.

Figure 7 is a graph showing illustrative relative heater temperatures, along with corresponding concentration pulses produced at each heater element. As indicated above, controller 130 may energize heater elements 20, 22, 24, and 26 in a time phased sequence with voltage signals 71. Illustrative time phased heater relative temperatures for heater elements 20, 22, 24, and 26 are shown by temperature profiles or lines 60, 62, 64, and 66, respectively.

In the example shown, controller 130 (Figure 3) may first energize first heater element 20 to increase its temperature as shown at line 60 of Figure 7. Since first heater element 20 is thermally coupled to first interactive element 40 (Figures 4 and 5), the first interactive element desorbs selected constituents into the streaming sample fluid 45 to produce a first concentration pulse 70 (Figure 7) at the detector 128 or 50, if no other heater elements were to be pulsed. The streaming sample fluid 45 carries the first concentration pulse 70 downstream toward second heater element 22, as shown by arrow 72.

Controller 130 may next energize second heater element 22 to increase its temperature as shown at line 62, starting at or before the energy pulse on element 20 has been stopped. Since second heater element 22 is thermally coupled to second interactive element 42, the second interactive element also desorbs selected constituents into streaming sample fluid 45 to produce a second concentration pulse. Controller 130 may energize second heater element 22 such that the second concentration pulse substantially overlaps first concentration pulse 70 to produce a higher concentration pulse 74, as shown in Figure 7. The streaming sample fluid 45 carries larger concentration pulse 74 downstream toward third heater element 24, as shown by arrow 76.

Controller 130 may then energize third heater element 24 to increase its temperature as shown at line 64 in Figure 7. Since third heater element 24 is thermally coupled to third interactive element 44, third interactive element 44 may desorb selected constituents into the streaming sample fluid to produce a third concentration pulse. Controller 130 may energize third heater element 24 such that the third concentration pulse substantially overlaps larger concentration pulse 74 provided by first and second heater elements 20 and 22 to produce an even larger concentration pulse 78. The streaming sample fluid 45 carries this larger concentration pulse 78 downstream toward an "Nth" heater element 26, as shown by arrow 80.

Controller 130 may then energize "N-th" heater element 26 to increase its temperature as shown at line 66. Since "N-th" heater element 26 is thermally coupled to an "N-th" interactive element 46, "N-th" interactive element 46 may desorb selected constituents into streaming sample fluid 45 to produce an "N-th" concentration pulse. Controller 130 may energize "N-th" heater element 26 such that the "N-th" concentration pulse substantially overlaps larger concentration pulse 78 provided by the previous N-1 interactive elements. The streaming sample fluid carries "N-th" concentration pulse 82 to either a separator 126 or a detector 50 or 128, as described below.

As indicated above, heater elements 20, 22, 24, and 26 may have a common length. As such, controller 130 can achieve equal temperatures of the heater elements by providing an equal voltage, current, or power pulse to each heater element. The voltage, current, or power pulse may have any desired shape including a triangular shape, a square shape, a bell shape, or any other shape. An approximately square shaped voltage, current, or power pulse is used to achieve temperature profiles 60, 62, 64, and 66 shown in Figure 7. The temperature profiles look like that, and note that the desorbed species are generated with a small time delay, relative to the voltage pulses.

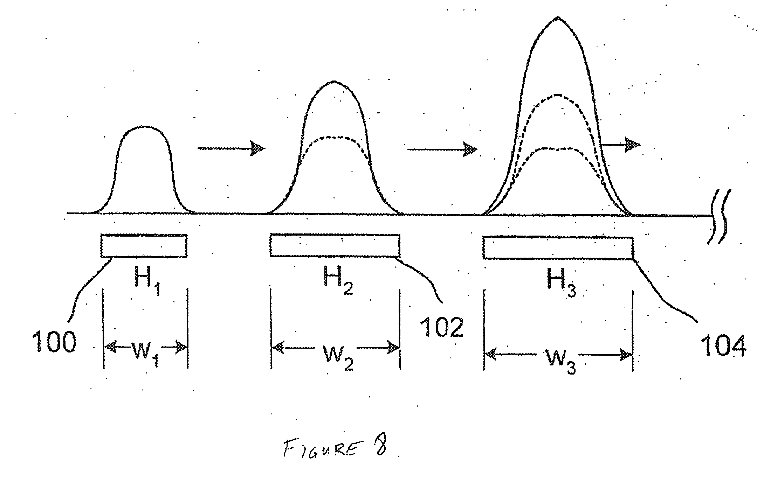

Figure 8 is a graph showing a number of heater elements to illustrate, first, how the concentration increases stepwise as the desorption of subsequent elements is appropriately synchronized with the streaming sample fluid velocity and, second, how the lengths of individual elements are matched to the expected increased rate of mass diffusivity flux as the concentration levels and gradients increase. It should be pointed out here that prior to the elements shown in Figure 8, the analyte concentration may have been already magnified by a factor, F, by virtue of pulsing an initial element with a length F-times longer than the one shown as element 100 (H1) or, alternatively, by simultaneously pulsing elements 1, 2,..., F and collecting all the desorbed analyte with the still cool element 100 (H1), before pulsing it. It is recognized that each of the concentration pulses may tend to decrease in amplitude and increase in length when traveling down channel 32 due to diffusion. To accommodate this increased length, it is contemplated that the length of each successive heater element may be increased along the streaming sample fluid. For example, a second heater element 102 may have a length W₂ that is larger than a length W₁ of a first heater element 100. Likewise, a third heater element 104 may have a length W₃ that is larger than length W₂ of second heater element 102. Thus, it is contemplated that the length of each heater element 100, 102, and 104 may be increased, relative to the adjacent upstream heater element, by an amount that corresponds to the expected increased length of the concentration pulse of the upstream heater elements due to diffusion. However, in some cases in which the target analyte concentrations are very small or the adsorbing film capacities are very large, it may be possible and advantageous to significantly decrease the length of subsequent or last heater elements in order to achieve maximum focusing performance of the concentrator function, which is based on minimizing the film volume into which we can adsorb a given quantity of analyte(s) from a given volume of sample gas pumped (pump 51 in Figure 2) through the concentrator during a given time, and thus increase the analyte(s) concentration by the same ratio of sample volume/film volume (of the last heater element).

To simplify the control of the heater elements, the length of each successive heater element may be kept constant to produce the same overall heater resistance between heater elements, thereby allowing equal voltage, current, or power pulses to be used to produce similar temperature profiles. Alternatively, the heater elements may have different lengths, and the controller may provide different voltage, current, or power pulse amplitudes to the heater element to produce a similar temperature profile.

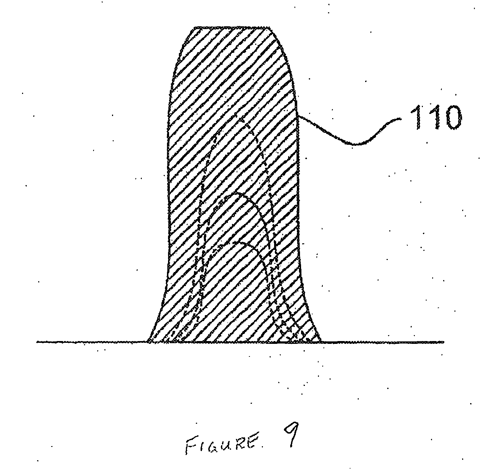

Figure 9 is a graph showing a concentration pulse 110 that achieves a 100 percent concentration level. It is recognized that even though concentration pulse 110 has achieved a maximum concentration level, such as 100 percent, the concentration of the corresponding constituent can still be determined. To do so, detector 50, 128, 164 may detect the concentration pulse 110, and controller 130 may integrate the output signal of the detector over time to determine the concentration of the corresponding constituent in the original sample of stream 45.

In "GC peak identification", it is desired to associate unequivocally a chemical compound with each gas peak exiting from a gas chromatograph (GC), which is a tool to achieve such separations of individual constituents from each other. There are several approaches for identifying components of a gas. In a GC-MS combination, each GC-peak is analyzed for its mass, while processing the molecular fragments resulting from the required ionization process at the MS inlet. In a GC-GC combination, different separation column materials are used in the first and second GC, in order to add information to the analysis record, which may help with compound identification. In a GC-AED combination, a microwave-powered gas discharge may generate tell-tale optical spectral emission lines (atoms) and bands (molecules) to help identify the gas of the GC-peak in the gas discharge plasma. In the GC-MDD or GC-GC-MDD configurations, the micro discharge device (MDD) may emit spectra of the analyte peaks as they elute from the GC or GC-GC, and reveal molecular and atomic structure and thus identification of the analyte peaks.

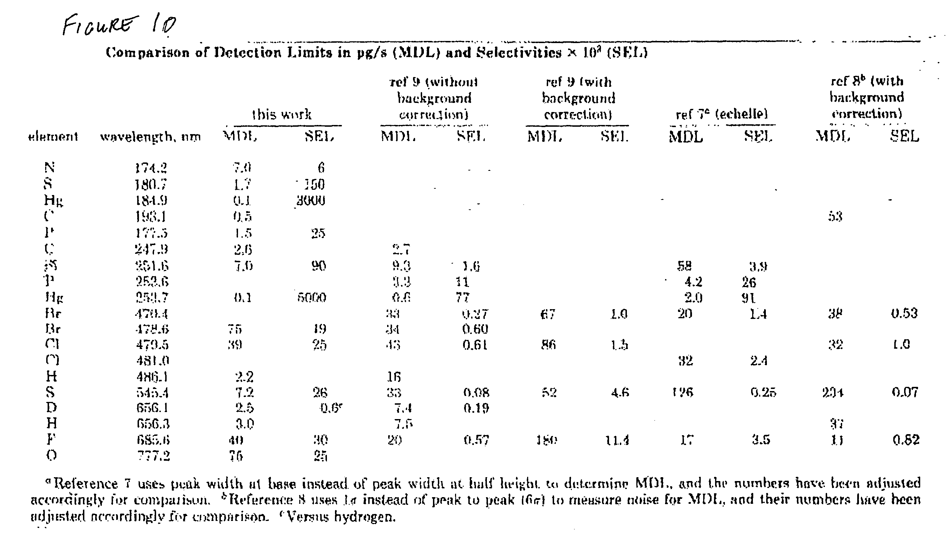

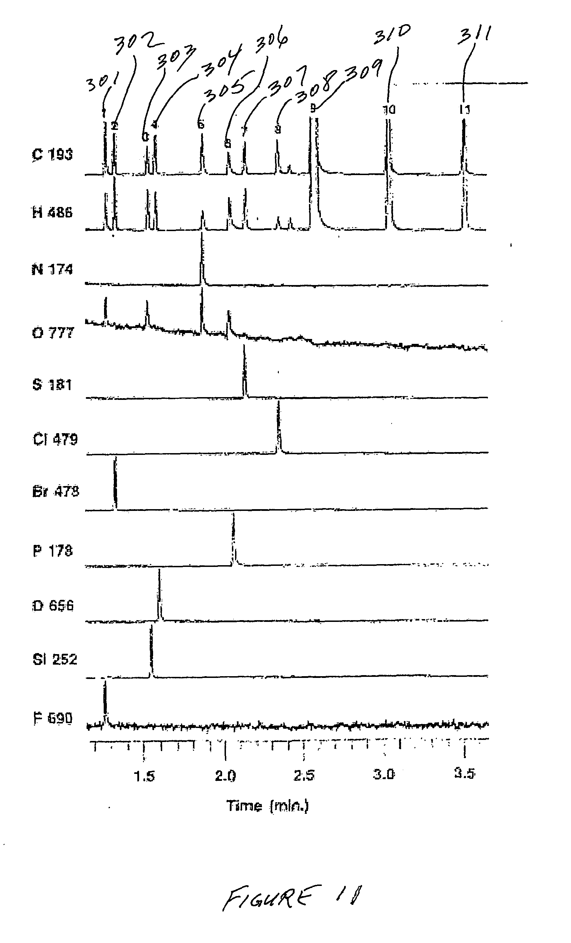

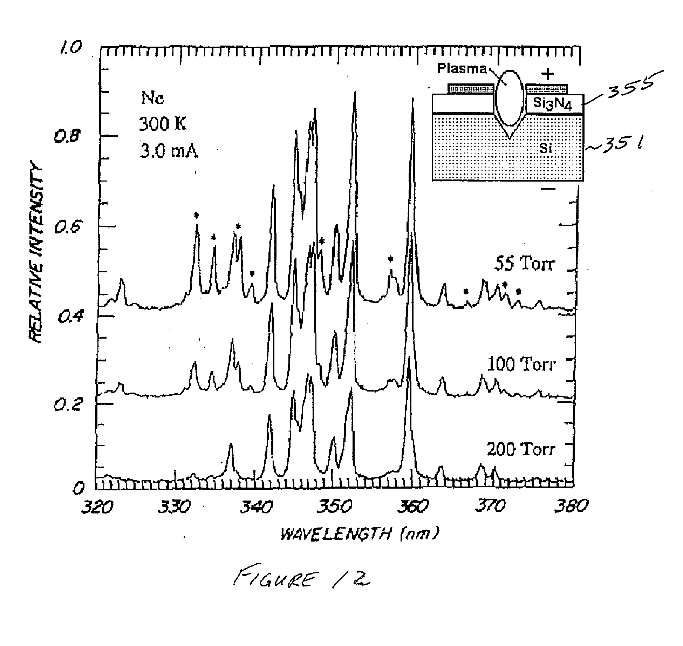

An example of how the selective wavelength channels of an AED can identify the atomic makeup of a compound separated by GC is illustrated in Figure 11, which shows separate channels for C, H, N, O, S, Cl, Br, P, D, Si and F atomic emissions, with a corresponding list of channels in the table of Figure 10. Figure 11 shows chromatograms of a multielement test mixture with various peaks that may indicate the element and its approximate amount. Peak 301 indicates 2.5 ng of 4-fluoroanisole; peak 302 indicates 2.6 ng of 1-bromohexane; peak 303 indicates 2.1 ng of tetraethylorthosilicate; peak 304 indicates 1.9 ng of n-perdeuterodecane; peak 305 indicates 2.7 ng of nitrobenzene; peak 306 indicates 2.4 ng of triethyl phosphate; peak 307 indicates 2.1 tert-butyl disulfide; peak 308 indicates 3.3 ng of 1,2,4-trichlorobenzene; peak 309 indicates 170 ng of n-dodecane; peak 310 indicates 17 ng of n-tridecane; and peak 311 indicates 5.1 ng of n-tetradecane. For such chromatograms, the GC conditions may include a column flow of 3.3 mL/min, a split ratio of 36:1, and an oven program from 60 degrees to 180 degrees Centigrade (C) at 30 degrees C/min.
Part of a UV spectrum of neutral and ionized emitters of Ne, generated with low-power microdischarges are shown in Figure 12. Also shown in this figure is that the spectral species change in intensity as the "Ne" pressure changes. The optical output may depend on several parameters such as discharge cavity geometry, applied voltage and pressure. Molecular bands are emitted and may even be used for "NO" measurements of such gases as in the hot exhaust of jet engines.

One may obtain useful gas composition information by feeding an environmental gas sample to microdischarge devices. In a first approach, one may use one microgas discharge device, the operating parameters (voltage, pressure, flow... and possibly the geometry) of which may be changed to yield variations in the output emission spectrum such that after evaluation and processing of such emission data, information on the type and concentration of the gas sample constituents may be made. In a second approach, one may use several micro-gas discharge devices, whereby the operating parameters of each may be changed, for emission output evaluation as in the first approach, and may obtain better results via a statistical analysis. The third approach may be the same as the first one, except that each micro-discharge may be only operated at one condition, but set to be different from that of the set-point of the other microdischarges.

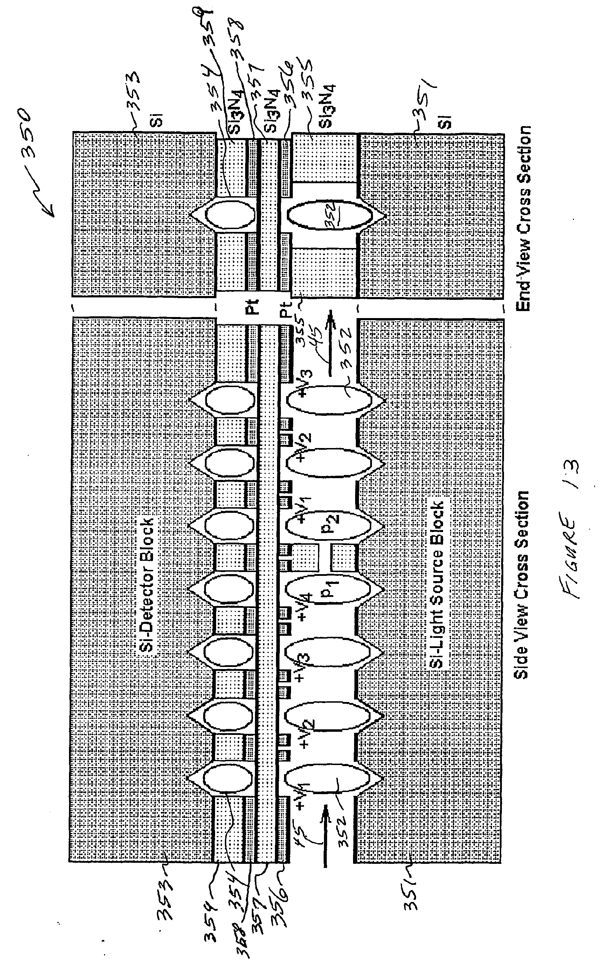

Figure 13 represents the third approach, whereby the gas sample may pass serially from one type of discharge to the next, and the assumption may be that the nature of the gas sample does not change during this process. The figure shows an array 350 of light source - detector pairs for gas composition sensing in a gas 45 stream at various pressures and voltages. The different voltages, +V1, +V2 ... and pressures P1 and P2 may be marked as such. The plasma of the micro discharges 352 from the light source block 351 are indicated by the ellipsoids between the (+) and (-) electrodes. Opposing source block 351 is a detector block 353 having micro gas' discharge devices operating as detectors 354 of the light from the source discharges 352. There may be filters situated on detectors 354. The filters may be different and selected for detection and analysis of particular groups of gases. The various lines of emission of the gases from the micro discharges may be detected and identified for determining the components of a detected gas. Array 350 may be connected to controller 130. A processor may be utilized in the control of the micro discharges and the detection of the effects of the discharges in the flow of gas 45 through array 350.

Light source block 351 may be made from silicon. Situated on block 351 may be a wall-like structure 355 of Si₃N₄ or Pyrex^{™}, forming a channel for containing the flow of gas 45 through device 350. On top of structure 355 may be a conductive layer of Pt or Cu material 356. On the Pt material is a layer 357 of Si₃N₄ that may extend over the flow channel. On top of layer 357 may be a layer 358 of Pt and a layer 359 of Si₃N₄ as a wall for forming a channel for detectors 354. The fourth approach may be like the third approach except for the feeding the gas sample to each discharge in a parallel rather than serial fashion.

A fifth approach may be the same as the fourth or third approach, except that the gas sample may have undergone a separation process as provided, e.g., by a conventional GC. A sixth approach may be the same as the fifth approach, except that prior to the separation process, the sample analytes of interest may be first concentrated by a conventional pre-concentration step.

The seventh approach may be the same as the sixth approach, except that prior to the separation process, the sample analytes of interest may have been previously concentrated by a multi-stage pre-concentration process and then electronically injected into the separator as offered by the phased heater array sensor.

In the sixth and seventh approaches with reference to Figure 2, the idea is to feed individual gas-analyte peaks eluting from the GC column or the phased heater array sensor separator channel to each discharge device in the shown array of discharges.

Gas flow may be in series as shown in Figure 13. Or it may be in parallel which may be necessary for an optimal peak identification, whereby (for the sake of minimizing total analysis time) each discharge cell may operate at a fixed condition of applied voltage, gas pressure (determined by the vacuum or suction pump at the exit of the array, e.g., by a Mesopump^{™}). In Figure 13, only two pressures may be indicated by way of example, as easily achieved by a flow restriction between the 4^{th} and 5^{th} discharge element. Several changes in the discharge parameter such as flow rate, temperature (via local micro-heaters) or geometry (hollow-cathode or flat-plate discharge, besides simple changes in the identification of cell) are not shown, but may be likewise implemented.

Due to their typically small size (10-100 µm), these sensors may not appear to use much real estate and may be included in block 128 of Figure 2.

Sensor 15 may have a flow sensor 125 situated between concentrator 124 and separator 126, a thermal-conductivity detector at the input of concentrator 124. It may have a thermal-conductivity detector between concentrator 124 and separator 126. There may be a thermal-conductivity detector at the output of discharge mechanism 350. Sensor 15 may include various combinations of some of the noted components in various locations in the sensor 128 of Figure 2, depending upon the desired application. The drawing of sensor 15 in Figure 2 is an illustrative example of the sensor. Sensor 15 may have other configurations not illustrated in this figure.

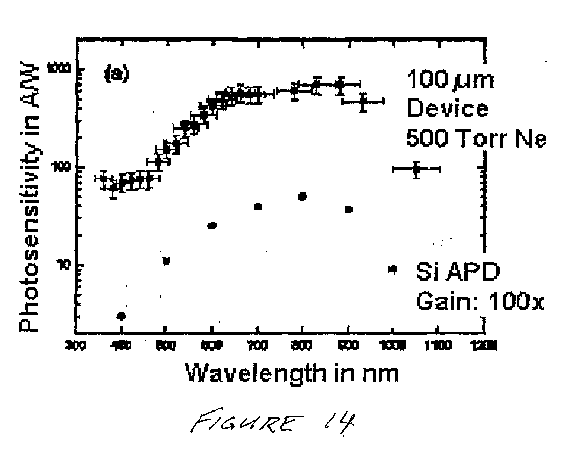

The gas micro-discharge cells may offer attractive features, which may significantly enhance the usefulness, versatility and value of the phased heater array sensor. Examples of the features include: 1) low power capability -- each discharge operates at 700-900 Torr (0.92-1.18 bar) with as little as 120 V DC, at 10 µm, which may amount to 1.2 mW that appears to be a minimal power not even achieved by microTDCs; 2) ease of building along with a compactness (50 x 50 µm), shown the insert of Figure 12; 3) the operability of micro-discharges as photo detectors which may be shown by the spectral responsivity comparison between a 100 µm microdischarge and an Si APD in Figure 14, which no other light sources such as 100-W microwave driven AEDs (requiring water cooling) are known to do; 4) the integratability and wafer level assembly of the discharge source and photodiodes with a phased heater array structure, without having to resort to Si-doping to manufacture monolithic Si-photodiodes; and 5) the added dimensionality (i.e., selectivity) by varying discharge parameters as noted above.

The present invention may have gas composition sensing capabilities via micro-discharge having: 1) a combination of phased heater array sensor with micro gas discharge devices; 2) the combination of 1), whereby one set or array of gas discharge devices may provide the spectral emission and another, complementary set (with or without narrow-band band-pass filters or micro spectrometer) may provide the light detection function; 3) the combination of 2) with appropriate permutations of designs described above under the first through seventh approaches; and 4) the flexibility to program heatable elements as additional pre-concentrator or additional separator elements of the phased heater array structure, as needed for a specific analysis, to achieve optimal preconcentration or separation performance.

The present phased heater array sensor-microdischarge detector combination over previously proposed micro gas analyzers may provide sensitivity, speed, portability and low power of the phased heater array sensor, combined with the selectivity, "peak-identification" capability, low-power, light source and detection capability, integratability, simplicity and compactness contributed by micro gas discharge devices, which no other microanalyzers have been known to achieve.

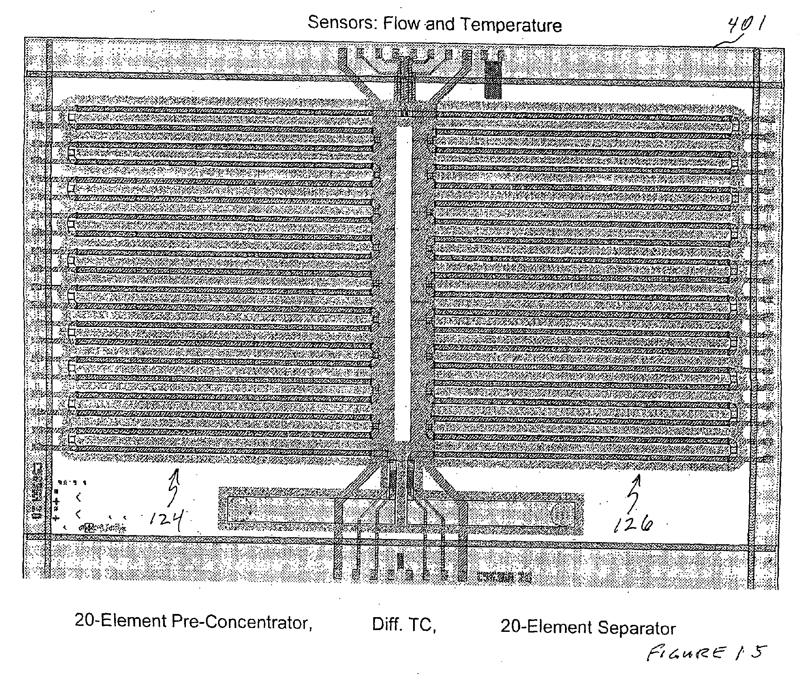

Figure 15 illustrates the integration of sensors, pre-concentrator and/or concentrator 124 and separator 126 of micro gas apparatus 15 (i.e., the phased heater array structure) on a single chip 401 which would be mounted and connected on a circuit board that also connects with other chips as well. One such other chip may hold FET switches, shift registers and logic. The 401 chip may reside on a daughter board. The 401 chip and the main circuit board were originally connected by about 110 wires. However, after the integration of all of the switches onto the separate chip on the daughter board, the number of printed circuit board routing leads and connector pins was reduced to about 10 (i.e., for differential temperature compensation, flow sensor, switch clock, logic, power and ground). The FET switches, shift registers and control logic located on a separate IC may be connected to the phased heater array structure chip via wire-bonds or solder-bumps. With the new logic of the FETs, a user of sensor system 15 may select the fraction of total heatable elements for operating as preconcentrators versus separators.

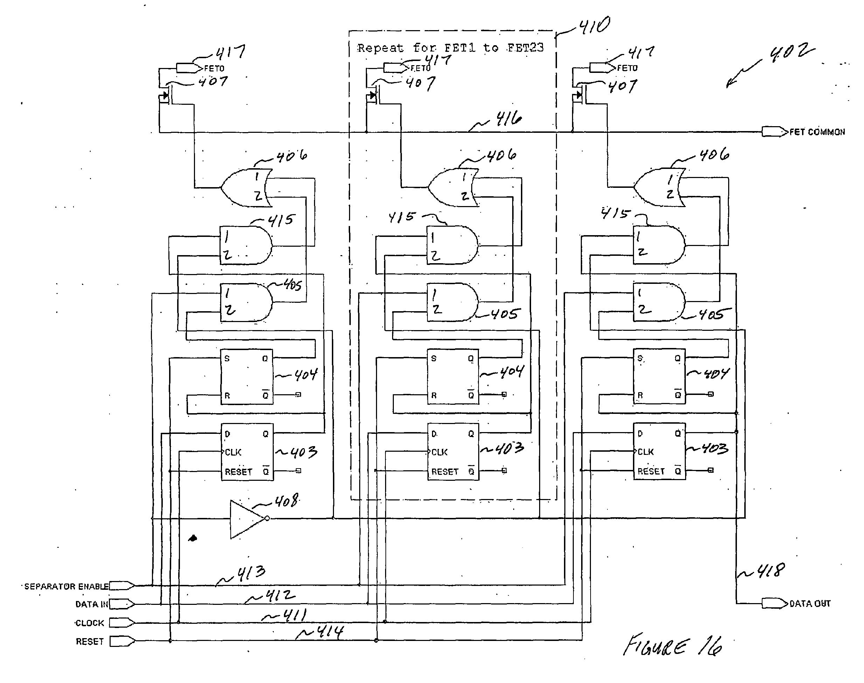

Figure 16 is a schematic of an illustrative example 402 of control logic for sensor system 11. Circuit 410 may be an instance of a logic cell in an array. It may contain D flip-flops 403, R-S flip-flops 404, AND gates 405 and 415, OR gates 406, FETs 407 and an inverter 408, plus additional circuitry as needed. A clock line 411 may be connected to a clock input of D flip-flop 403. A separator enable line 413 may be connected to a first input of AND gate 405. A data-in line 412 may be connected to a D input of flip-flop 403. A reset line 414 may be connected to an S input of flip-flop 404 and a reset input of flip-flop 403. A Q output of flip-flop 404 may be connected to a second input of AND gate 405. A Q output of flip-flop 403 may be connected to an R input of flip-flop 404 and to a first input of AND gate 415. Separator enable line 413 may be connected to an input of inverter 408. An output of inverter 408 may be connected to a second input of AND gate 415. Outputs of AND gates 415 and 405 may be connected to first and second inputs, respectively, of OR gate 406. An output of OR gate 406 may be connected to a gate of FET 407. The other terminals of FET 407 may be connected to a FET common line 416 and a FET output terminal 417, respectfully. The far right logic cell may have a Q output of flip-flop 403 connected to a data out line 418.

This logic may allow the user to pre-select the number of pre-concentrator elements that the circuit will pulse and heat up, before pausing and then ramping up the temperature on all of the remaining heater elements, which then may function as part of the segmented separator. There is an additional dimension of flexibility which may allow for the depositing of different materials on any of the phased heater array sensor elements of chip 401 chip via suitable masking, so that preferential preconcentration, filtering of interference and cascaded separation may be enabled.

Figure 16 further illustrates how up to 50 FET switches may be controlled by on-chip logic, each having an on resistance at or below 0.5 ohms and be able to switch about 12 volt potentials. The on-chip logic may operate in two modes, that is, the concentrator or 1^{st} mode and the separator or 2^{nd} mode, the respective mode being determined by a control line bit. The 1^{st} mode may involve a shift register which, after a reset, sequentially turns on a low resistance FET, and disables a flip-flop associated with that same FET. At the next clock cycle, the first FET turns off, and the next FET turns on and its associated flip-flop is disabled. This sequence may be repeated until some external drive electronics turns off the clock and enables the 2^{nd} operating mode. Once the second mode is enabled, all of the FETs where the flip-flop has not been disabled may turn on simultaneously. This 2^{nd} mode may stay on until the reset has been triggered and the flip-flops are reset, the FETs are turned off and the process can be repeated.

Two chips may be used in series to bond to the (up to 50) the phased heater array sensor chip pads on each of its sides, such that the sequential switching will go from the first chip to the second chip. It may be necessary for the signal from the last switch on the first chip to trigger the first switch on the second chip. It is possible that the mode switch from sequential addressing of the remaining FETs in parallel may happen sometime before or after the switching has moved to the second chip.

One may introduce adsorber coating diversity into the phased heater array sensor heater elements, such as by alternating individual elements or groups of elements in either or both preconcentrator or the separator, with more than one adsorber material, and adjusting the logic program for the switches as in Figure 16 or to favor (in terms of maximum applied voltage or temperature) certain types of coatings in the preconcentrator and equally or differently in the separator, to achieve the desired analyte preconcentrating, analyte filtering and analysis results which may be the analysis of selected group preconcentrator pulses or cascaded (in time) preconcentrator analyte pulses.

The user may be enabled with great flexibility to adjust the phased heater array sensor operation and performance to the varying needs imposed by the analysis problem: He can select the number or fraction of total heater array elements to function as pre-concentrators vs. separators, thus varying the concentration of the analyte relative to the separation, i.e., resolution and selectivity of the analyte components, while retaining the ability to design and fabricate low-power, optimally temperature-controlled heater elements, that-feature structural integrity, optimal focusing features, analyte selectivity/filtering, and smart integration off preconcentration, separation, flow control and detection technology, such as TC and micro-plasma-discharge sensors. One may integrate the CMOS drive electronics with the phased heater array sensor flow-channel chip.

## Claims

1. A fluid sensor (10,15) comprising:
a concentrator (124);
a separator (126) connected to-concentrator (124); and
a phased heater array having a first plurality of heating elements (20, 22,24, 26) situated in the concentrator (124) and a second plurality of heating elements (20,22, 24, 26) situated in the separator (126),
**characterised by** a ratio control mechanism (490) for changing, in use, the ratio of the first plurality of heating elements which heat up relative to the second plurality of heating elements which heat up.

2. The sensor of claim 1, further comprising:
a first detector (354) connected to the separator (126); and
a micro discharge (352) mechanism proximate to the first detector (354).

3. The sensor of claim 2, further comprising a second detector (354) connected to the concentrator (124).

4. The sensor of claim 3, further comprising a flow sensor (125) connected to the concentrator (124) and the separator (126).

## Patentansprüche

1. Fluidsensor (10, 15), umfassend:
einen Konzentrator (124);
eine Trennvorrichtung (126), die mit dem Konzentrator (124) verbunden ist; und
eine phasengesteuerte Heizanordnung mit mehreren ersten Heizelementen (20, 22, 24, 26), die sich im Konzentrator (124) befinden, und mehreren zweiten Heizelementen (20, 22, 24, 26), die sich in der Trennvorrichtung (126) befinden,
**gekennzeichnet durch** einen Verhältnissteuermechanismus (490) zum Ändern im Gebrauch des Verhältnisses der sich erwärmenden mehreren ersten Heizelemente bezüglich der sich erwärmenden mehreren zweiten Heizelemente.

2. Sensor nach Anspruch 1, weiterhin umfassend:
einen ersten Detektor (354), der mit der Trennvorrichtung (126) verbunden ist; und
einen Mikroentladungsmechanismus (352) nahe dem ersten Detektor (354).

3. Sensor nach Anspruch 2, weiterhin umfassend einen zweiten Detektor (354), der mit dem Konzentrator (124) verbunden ist.

4. Sensor nach Anspruch 3, weiterhin umfassend einen Strömungssensor (125), der mit dem Konzentrator (124) und der Trennvorrichtung (126) verbunden ist.

## Revendications

1. Capteur de fluide (10, 15), comprenant :
un concentrateur (124) ;
un séparateur (126) connecté au concentrateur (124) ; et
un réseau d'éléments chauffants en phase ayant une première pluralité d'éléments chauffants (20, 22, 24, 26) situés dans le concentrateur (124) et une deuxième pluralité d'éléments chauffants (20, 22, 24, 26) situés dans le séparateur (126),
**caractérisé par** un mécanisme de commande de rapport (490) pour modifier, pendant le fonctionnement, le rapport de la première pluralité d'éléments chauffants qui sont chauffés par rapport à la deuxième pluralité d'éléments chauffants qui sont chauffés.

2. Capteur selon la revendication 1, comprenant en outre :
un premier détecteur (354) connecté au séparateur (126) ; et
un mécanisme de micro-décharge (352) à proximité du premier détecteur (354).

3. Capteur selon la revendication 2, comprenant en outre un deuxième détecteur (354) connecté au concentrateur (124).

4. Capteur selon la revendication 3, comprenant en outre un capteur d'écoulement (125) connecté au concentrateur (124) et au séparateur (126).
